# EUROPEAN PATENT APPLICATION

(11) **EP 2 571 281 A1**
(43) Date of publication of application: **20.03.2013**
(21) Application number: 12160629.7
(22) Date of filing: 21.03.2012
(51) Int. Cl.: H04N 21/44, H04N 21/4623, H04N 21/43

(54) **Image processing apparatus and control method thereof**

(30) Priority: 16.09.2011 KR 20110093533
(71) Applicant: Samsung Electronics Co., Ltd., Suwon-si, Gyeonggi-do, 443-742 (KR)
(72) Inventor: Paik, Seung-chul, Gyeonggi-do (KR)
(74) Representative: Jacobs, Bart

(57) **Abstract**

Disclosed is an image processing apparatus including: a tuner unit which receives a broadcast signal containing predetermined contents; a conditional access module unit which determines authority to view the contents; a decoder unit which decodes a broadcast signal output from the conditional access module unit; a detector which determines a level of distortion of a signal output from the conditional access module unit; and a compensation unit which compensates for the signal distortion so that the level of the signal distortion determined by the detector can be equal to or lower than a predetermined level.

With this, there are provided an image processing apparatus and a control method thereof, which can solve a problem that may arise when timing of data and clock of a video signal output from a conditional access module are not matched with each other, thereby keeping compatibility.

## Description

Apparatuses and methods consistent with the exemplary embodiments relate to an image processing apparatus and a control method thereof, and more particularly to an image processing apparatus, on which a user can watch a pay broadcast through a conditional access module (CAM), and a control method thereof.

An image processing apparatus is an apparatus that receives and processes a video signal containing video information, which can be variously classified according to its major functions. The image processing apparatus may receive a video signal from various video sources, and for example may receive a broadcast signal from a broadcast transmitter of a broadcasting station through airwaves or a cable. Meanwhile, there is a pay broadcast channel among broadcast channels. If the image processing apparatus receives a pay broadcast and provides it to a user, there is needed a conditional access system that encodes a program of the pay broadcast and vests only subscribers with authority to view the pay broadcast.

As an example of the conditional access system, there is a product that provides just an interface through a common interface to connect with an external conditional access module so that a user can connect the conditional access module as an offline purchase to the interface and view a certain pay broadcast.

In the case of the image processing apparatus using the common interface, a transport stream (TS) of a video signal is received through the common interface. In a conventional image processing apparatus, input timing of data and a clock of the transport stream (TS) are fixed through a certain buffer or an R chip time constant. That is, the same setting is applied regardless of the kinds of conditional access module connected to the common interface, and it is therefore impossible to optimize various conditional access modules.

The conditional access module is produced in various forms by various companies and has no compatible standard optimal to the common interface. Thus, when the data and the clock of the transport stream output differently according to the characteristics of the conditional access modules are decoded in the decoder by the fixed timing, there may arise a problem of compatibility and thus signal distortion may also occur, thereby causing an error in the decoding, displaying a corrupted image, etc.

Accordingly, one or more exemplary embodiments provide an image processing apparatus and a control method thereof, which can solve a problem that may arise when timing of data and clock of a video signal output from a conditional access module are not matched with each other, thereby keeping compatibility.

The foregoing and/or other aspects may be achieved by providing an image processing apparatus including: a tuner unit which receives a broadcast signal containing predetermined contents; a conditional access module unit which determines authority to view the contents; a decoder unit which decodes a broadcast signal output from the conditional access module unit; a detector which determines a level of distortion of a signal output from the conditional access module unit; and a compensation unit which compensates for the signal distortion so that the level of the signal distortion determined by the detector can be equal to or lower than a predetermined level.

The detector may determine the level of the signal distortion based on an error rate of data decoded by the decoder unit.

The compensation unit may include a timing/amplitude compensator which adjust at least one of clocks or data of the signal with regard to either of timing or amplitude; and a controller which controls the timing/amplitude compensator to operate if the error rate is higher than a predetermined rate.

The timing/amplitude compensator may be provided between the conditional access module unit and the decoder unit.

The timing/amplitude compensator may adjust the timing or the amplitude as much as a preset value if the error rate is higher than a predetermined rate.

The controller may control the timing/amplitude compensator to adjust either of the timing or amplitude with a preset initial value if the error rate of the data detected by the detector first reaches the predetermined level.

The detector and the compensation unit may operate if the conditional access module unit determines the image processing apparatus has the authority to view the contents.

The image processing apparatus may further include a user input unit which receives a user's command, wherein the detector and the compensation unit operate if a user's command is input to the user input unit.

Another aspect may be achieved by providing a control method of an image processing apparatus having a conditional access module, the method including: receiving a broadcast signal containing predetermined contents; determining authority to view the contents through the conditional access module unit; determining a level of distortion of a signal output from the conditional access module unit; and compensating for the signal distortion so that the determined level of the signal distortion can be equal to or lower than a predetermined level.

The method may further include decoding the broadcast signal; and determining an error rate of decoded data, wherein the determining the level of the signal distortion includes determining the level of the signal distortion based on an error rate of the decoded data.

The compensating for the signal distortion may include adjusting at least one of clocks or data of the signal with regard to either of timing or amplitude

The adjusting either of the timing or the amplitude may include adjusting the timing or the amplitude as much as a preset value if the error rate is higher than a predetermined rate.

The method may further include adjusting either of the timing or amplitude with a preset initial value if the error rate of the data first reaches the predetermined level.

The above and/or other aspects will become apparent and more readily appreciated from the following description of the exemplary embodiments, taken in conjunction with the accompanying drawings, in which:
FIG. 1 is a control block diagram of an image processing apparatus according to an exemplary embodiment;
FIG. 2 is a view showing signal distortion occurring in the image processing apparatus;
FIG. 3 is a view showing compensation for timing distortion of a signal;
FIG. 4 is a first control flowchart according to an exemplary embodiment; and
FIG. 5 is a second control flowchart of the image processing apparatus according to an exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

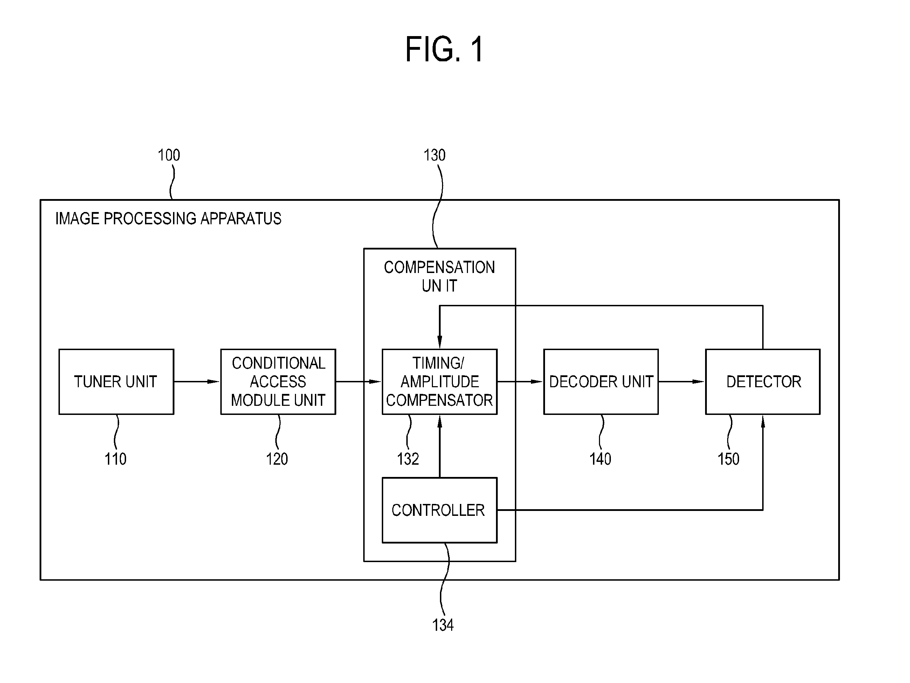

FIG. 1 is a control block diagram of an image processing apparatus 100 according to an exemplary embodiment.

As shown therein, the image processing apparatus 100 includes a tuner unit 110, a conditional access module unit 120, a decoder unit 140, a detector 150, and a compensation unit 130. The image processing apparatus 100 in this exemplary embodiment may receive a broadcast signal from an external image source (not shown), or may receive a pay broadcast through a common interface. The image processing apparatus 100 may include a digital television (TV), a set-top box, etc., but not limited thereto. Any device can be involved in the image processing apparatus 100 according to an exemplary embodiment as long as it can receive and process an external broadcast signal.

The tuner unit 110 receives a broadcast signal containing predetermined contents. The tuner unit 110 is tuned to a broadcast signal having a frequency band corresponding to a tuning control signal, and receives a video signal, an audio signal and various data contained in the broadcast signal of the tuned channel in the form of a transport stream packetized by time division multiplexing. The transport stream is transmitted in such a manner that predetermined data and clocks for outputting data at certain speed are synchronized. The tuner unit 110 includes at least one tuner, in which the tuner may employ each of an analog tuner and a digital tuner so as to receive all of an analog broadcast signal and a digital broadcast signal, or may employ a multi tuner capable of receiving both of them.

The conditional access module unit 120 determines view authority of contents contained in a broadcast signal. A user can insert a conditional access module in the conditional access module unit 120, in which the inserted conditional access module stores a user's personal identification information and thus determines whether the a tuned pay channel is viewable. The transport stream of the pay channel is scrambled to be protected from unauthorized reception and then transmitted. If it is determined that a user is authorized to the corresponding channel, the transport stream is descrambled by the conditional access module and then undergoes decoding or the like processes, thereby allowing him/her to view the corresponding channel.

The decoder unit 140 decodes the broadcast signal output from the conditional access module unit 120. The transport stream of the received video signal is encoded by a compaction technique such as moving picture experts group (MPEG), etc. and transmitted, and the decoder unit 140 decodes the video signal descrambled by the conditional access module unit 120 into a viewable form.

The detector 150 determines a level of distortion of a signal output from the conditional access module unit 120. The transport stream of the video signal is transmitted as predetermined data and clocks are synchronized, and varied in the timing or amplitude of the data and clock while passing through the conditional access module, thereby causing the signal distortion.

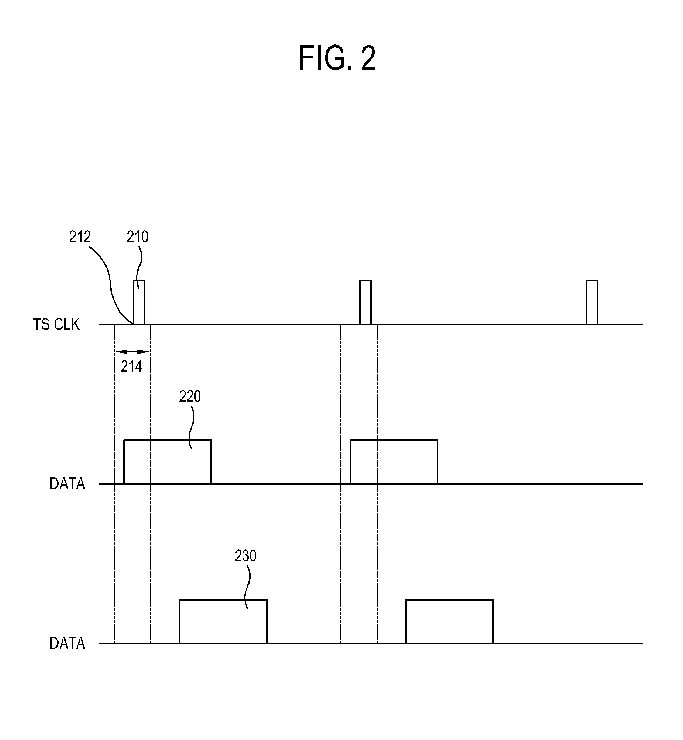

For example, as shown in FIG. 2, in the case where the pulse of the data is designed to be output in sync with an ascending edge 212 of the pulse of clock 210, if the data 220 is output within a predetermined range 214 from the ascending edge 212, the data can be normally output by a timing margin. However, if the data 230 is output beyond the predetermined range 214 from the ascending edge 212 of the clock 210, an error may occur while the data is decoded. The detector 150 determines the level of such signal distortion and transmits it to the compensation unit 130 to be described later.

The detector 150 determines the level of the signal distortion based on an error rate of the data decoded by the decoder unit 140. If the signal is distorted, the data may not be normally decoded, and for example a corrupted image may be displayed while the decoder unit 140 decodes the data. While the decoder 140 decodes the data, the detector 150 may determine an error rate based on a ratio of error data to data decoded for predetermined time.

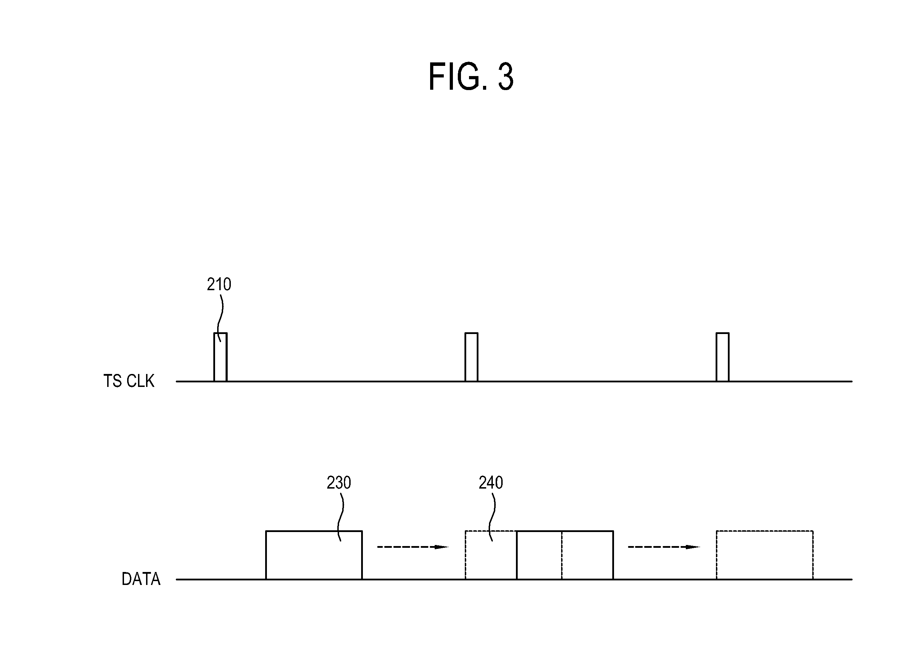

The compensation unit 130 compensates for the signal distortion so that the level of the signal distortion determined by the detector 150 can be equal to or lower than a predetermined level. For example, as shown in FIG. 3, if the clock and the data are not matched with regard to timing, the signal distortion can be compensated to be equal to or lower than a predetermined level in such a manner that the timing of the data is delayed to be output at the ascending edge of the clock.

Besides the distortion in the timing of the data described with reference to FIGs. 2 and 3, the amplitude of the data may be distorted by noise due to instability of power supplied from the conditional access module unit 120, or the like. If the amplitude of the data is distorted, a logic state of the data may be determined wrongly and an error may occur during a decoding process. To compensate for the distortion in the amplitude of the data, the compensation unit 130 adjusts offset voltage.

The compensation unit 130 includes a timing/amplitude compensator 132 that adjusts either of the timing or amplitude of at least one of the clock and data of a signal, and a controller 134 that controls the timing/amplitude compensator 132 to operate when an error rate is higher than a predetermined rate. The timing/amplitude compensator 132 may be configured with a publicly known filtering circuit, and the controller 134 may be configured with a microcomputer (Micom), a microcontroller unit (MCU), etc. and control the timing/amplitude compensator 132 to operate in accordance with the levels of the signal distortion.

The timing/amplitude compensator 132 can adjust the timing or amplitude as much as a preset value if the error rate of the decoded data is higher than a predetermined rate. The detector 150 detects the error rate of the data in real time, and the timing/amplitude compensator 132 repetitively adjusts the timing or amplitude of the data as much as the preset value until the error rate detected by the detector 150 is equal to or lower than a predetermined rate (for example, becomes 0). At this time, the timing/amplitude compensator 132 is provided between the conditional access module unit 120 and the decoder unit 140 in order to previously compensate for either of the timing or amplitude of the clock and data output before the decoder unit 140 decodes the data.

The controller 134 may control the timing/amplitude compensator 132 to adjust either of the timing or amplitude based on a preset initial value when the error rate of the data detected by the detector 150 first reaches a predetermined rate. The preset initial value is determined during a design process or the like in accordance with the conditional access module, and the timing or the amplitude is adjusted based on the initial value so that time taken in lowering the error rate of the data can be more reduced.

There may be various exemplary embodiments to the operations where the detector 150 detects the level of the signal distortion and the compensation unit 130 compensates for the signal distortion to be equal to or lower than a predetermined level.

For example, if the conditional access module unit 120 determines that a user has the content view authority, the controller 134 may control the detector 150 and the compensation unit 130 to operate. If it is determined that the conditional access module is inserted and a user has the view authority, an input video signal is descrambled and then decoded by the decoder 140 so that the detector 150 and the compensation unit 130 can operate to decrease the signal distortion from the beginning of the decoding.

Also, the image processing apparatus 100 may further include a user input unit to receive a user's command about the error detection and compensation. If a user's command is received through the user input unit, the detector 150 and the compensation unit 130 may operate to decrease the signal distortion.

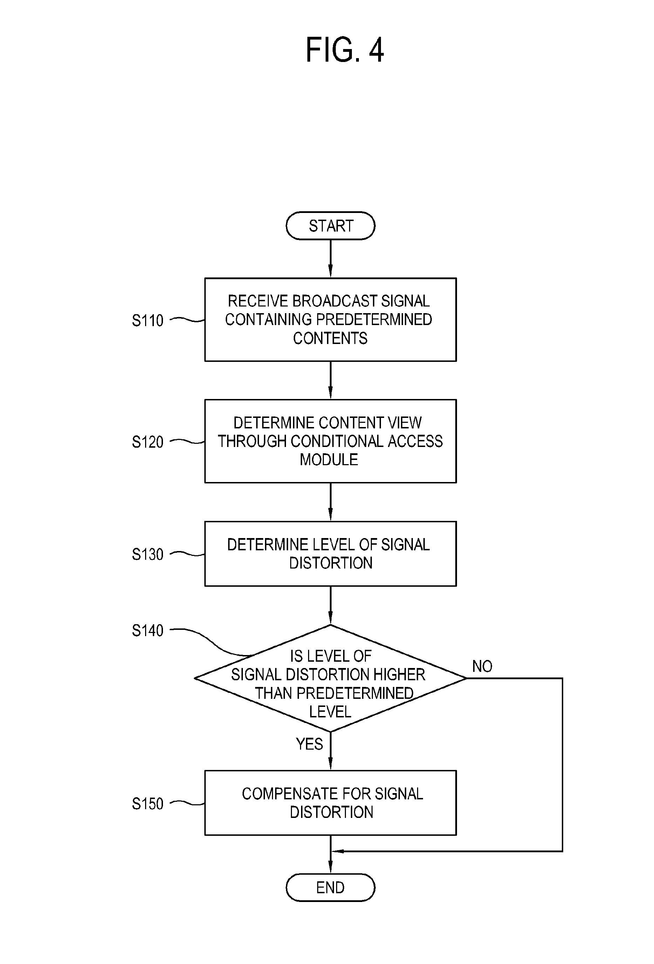

FIG. 4 is a first control flowchart according to an exemplary embodiment.

The image processing apparatus 100 in this exemplary embodiment includes a conditional access module for determining the authority to view the pay broadcast.

At operation S110, the image processing apparatus 100 receives a broadcast signal containing predetermined contents. The broadcast signal is received in the form of the transport stream where the video signal, the audio signal and various data are packetized by the time division multiplexing. The transport stream is transmitted in such a manner that predetermined data and clocks for outputting data at certain speed are synchronized. The tuner unit 110 includes at least one tuner, in which the tuner may employ each of an analog tuner and a digital tuner so as to receive all of an analog broadcast signal and a digital broadcast signal, or may employ a multi tuner capable of receiving both of them.

At operation S120, the image processing apparatus 100 determines the content view authority through the conditional access module. The transport stream of the pay channel is scrambled to be protected from unauthorized reception and then transmitted. If it is determined that a user is authorized to the corresponding channel, the transport stream is descrambled by the conditional access module and then undergoes decoding or the like processes, thereby allowing him/her to view the corresponding channel.

At operation S130, the image processing apparatus 100 determines the level of the distortion of the signal output from the conditional access module if it is determined by the conditional access module that a user has the authority to view contents. The transport stream of the video signal is transmitted as predetermined data and clocks are synchronized, and varied in the timing or amplitude of the data and clock while passing through the conditional access module, thereby causing the signal distortion.

Then, the image processing apparatus 100 determines whether the level of the signal distortion is higher than a predetermined level at operation S140, and compensates for the signal distortion so that the determined level of the signal distortion can be equal to or lower than a predetermined level at operation S150. In this case, the compensation for the signal distortion may include adjustment of either of the timing or amplitude of at least one of the clock and data of the signal. The method of adjusting the timing or amplitude of the signal is the same as above.

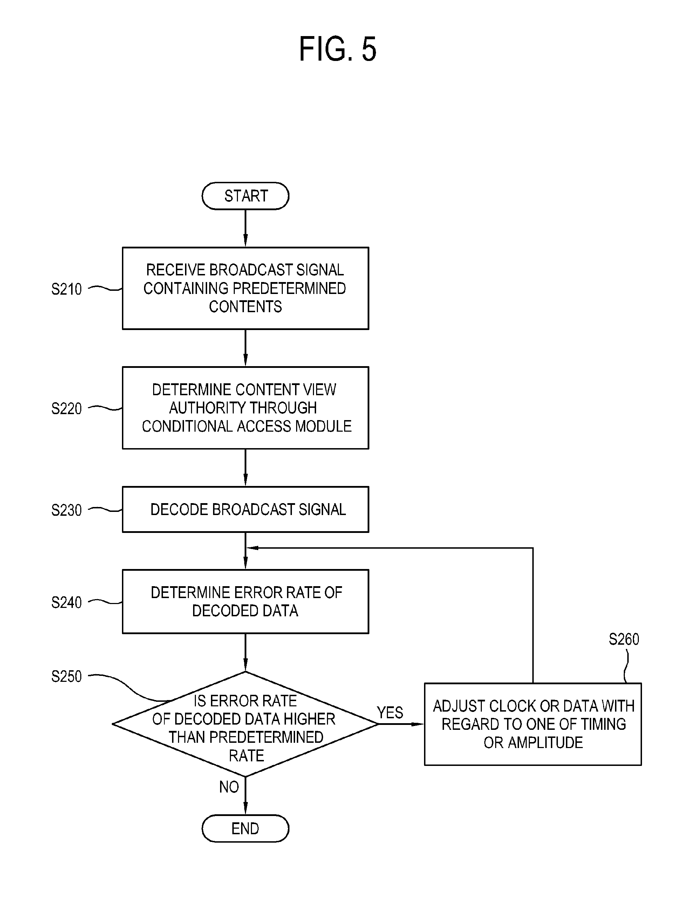

FIG. 5 is a second control flowchart of the image processing apparatus according to an exemplary embodiment.

The image processing apparatus 100 receives a broadcast signal containing predetermined contents at operation S210, and determines whether it has the authority to view the contents of the received broadcast signal through the conditional access module at operation S220.

If it is determined that the image processing apparatus 100 has the authority to view the contents, the broadcast signal output from the conditional access module is decoded at operation S230. The transport stream of the received video signal is encoded by a compaction technique such as moving picture experts group (MPEG), etc. and transmitted, and the video signal output from the conditional access module unit is decoded into a viewable form.

At operation S240, the image processing apparatus 100 determines an error rate of the decoded data. If the signal distortion is caused by different characteristics of the conditional access module, the data may not be normally decoded, and for example a corrupted image may be displayed while the data is decoded. While the data is decoded, the image processing apparatus 100 may determine an error rate based on a ratio of error data to data decoded for predetermined time.

At operation S250, the image processing apparatus 100 determines whether the error rate of the decoded data is higher than a predetermined rate. If the error rate is higher than a predetermined rate, the image processing apparatus 100 adjusts at least one of the clock and data of the signal with regard to either of the timing or amplitude at operation S260, thereby compensating for the signal distortion so that the level of the signal distortion can be equal to or lower than a predetermined level. The image processing apparatus 100 detects the error rate of data in real time, and repetitively adjusts the timing or amplitude of the data as much as the preset value until the detected error rate is equal to or lower than a predetermined rate (for example, becomes 0).

When the error rate of the data first reaches a predetermined rate while detecting the error rate, the image processing apparatus 100 may adjust either of the timing or amplitude based on a preset initial value. The preset initial value is determined during a design process or the like in accordance with the conditional access module, and the timing or the amplitude is adjusted based on the initial value so that time taken in lowering the error rate of the data can be more reduced.

Although a few exemplary embodiments have been shown and described, it will be appreciated by those skilled in the art that changes may be made in these exemplary embodiments without departing from the scope of the invention which is defined in the appended claims and their equivalents.

## Claims

1. An image processing apparatus comprising:
a tuner unit which receives a broadcast signal containing predetermined contents;
a conditional access module unit which determines authority to view the contents;
a decoder unit which decodes a broadcast signal output from the conditional access module unit;
a detector which determines a level of distortion of a signal output from the conditional access module unit; and
a compensation unit which compensates for the signal distortion so that the level of the signal distortion determined by the detector can be equal to or lower than a predetermined level.

2. The image processing apparatus according to claim 1, wherein the detector determines the level of the signal distortion based on an error rate of data decoded by the decoder unit.

3. The image processing apparatus according to claim 2, wherein the compensation unit comprises
a timing/amplitude compensator which adjust at least one of clocks or data of the signal with regard to either of timing or amplitude; and
a controller which controls the timing/amplitude compensator to operate if the error rate is higher than a predetermined rate.

4. The image processing apparatus according to claim 3, wherein the timing/amplitude compensator is provided between the conditional access module unit and the decoder unit.

5. The image processing apparatus according to claim 4, wherein the timing/amplitude compensator adjusts the timing or the amplitude as much as a preset value if the error rate is higher than a predetermined rate.

6. The image processing apparatus according to claim 3, wherein the controller controls the timing/amplitude compensator to adjust either of the timing or amplitude with a preset initial value if the error rate of the data detected by the detector first reaches the predetermined level.

7. The image processing apparatus according to claim 1, wherein the detector and the compensation unit operate if the conditional access module unit determines the image processing apparatus has the authority to view the contents.

8. The image processing apparatus according to claim 1, further comprising a user input unit which receives a user's command,
wherein the detector and the compensation unit operate if a user's command is input to the user input unit.

9. A control method of an image processing apparatus having a conditional access module, the method comprising:
receiving a broadcast signal containing predetermined contents;
determining authority to view the contents through the conditional access module unit;
determining a level of distortion of a signal output from the conditional access module unit; and
compensating for the signal distortion so that the determined level of the signal distortion can be equal to or lower than a predetermined level.

10. The method according to claim 9, further comprising decoding the broadcast signal; and
determining an error rate of decoded data,
wherein the determining the level of the signal distortion comprises determining the level of the signal distortion based on an error rate of the decoded data.

11. The method according to claim 10, wherein the compensating for the signal distortion comprises adjusting at least one of clocks or data of the signal with regard to either of timing or amplitude

12. The method according to claim 11, wherein the adjusting either of the timing or the amplitude comprises adjusting the timing or the amplitude as much as a preset value if the error rate is higher than a predetermined rate.

13. The method according to claim 11, further comprising adjusting either of the timing or amplitude with a preset initial value if the error rate of the data first reaches the predetermined level.
